(19) Europäisches Patentamt
European Patent Office
Office européen des brevets

(11) **EP 2 494 839 B1**

(12) **EUROPEAN PATENT SPECIFICATION**

(45) Date of publication and mention
of the grant of the patent:
**11.09.2013 Bulletin 2013/37**

(51) Int Cl.:
***H04W 72/12*** *(2009.01)*

(21) Application number: **10779127.9**

(22) Date of filing: **29.10.2010**

(86) International application number:
**PCT/US2010/054765**

(87) International publication number:
**WO 2011/053807 (05.05.2011 Gazette 2011/18)**

(54) **SCHEDULING SIMULTANEOUS TRANSMISSIONS IN WIRELESS NETWORK**

PLANUNG VON SIMULTANEN ÜBERTRAGUNGEN IN DRAHTLOSEN NETZEN

PLANIFICATION DE TRANSMISSIONS SIMULTANÉES DANS UN RÉSEAU SANS FIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.10.2009 US 256825 P
17.09.2010 US 885327**

(43) Date of publication of application:
**05.09.2012 Bulletin 2012/36**

(73) Proprietor: **Qualcomm Incorporated
San Diego, CA 92121 (US)**

(72) Inventors:
  • **ABRAHAM, Santosh Paul
    San Diego
    California 92121 (US)**
  • **VERMANI, Sameer
    San Diego
    California 92121 (US)**
  • **TAGHAVI NASRABADI, Mohammad Hossein
    San Diego
    California 92121 (US)**
  • **SAMPATH, Hemanth
    San Diego
    California 92121 (US)**

(74) Representative: **Wagner, Karl H.
Wagner & Geyer
Gewürzmühlstrasse 5
80538 Munich (DE)**

(56) References cited:
**EP-A2- 2 037 706        WO-A1-2005/099195
US-A1- 2009 116 444**

## Description

## BACKGROUND

### Field

Certain aspects of the present disclosure generally relate to wireless communications and, more particularly, to a method for scheduling simultaneous transmissions in a wireless network.

### Background

In order to address the issue of increasing bandwidth requirements that are demanded for wireless communications systems, different schemes are being developed to allow multiple user terminals to communicate with a single access point by sharing the channel resources while achieving high data throughputs. Multiple Input Multiple Output (MIMO) technology represents one such approach that has recently emerged as a popular technique for the next generation communication systems. MIMO technology has been adopted in several emerging wireless communications standards such as the Institute of Electrical and Electronics Engineers (IEEE) 802.11 standard. The IEEE 802.11 denotes a set of Wireless Local Area Network (WLAN) air interface standards developed by the IEEE 802.11 committee for short-range communications (e.g., tens of meters to a few hundred meters over a carrier frequency of 60GHz).

A MIMO system employs multiple ($N_T$) transmit antennas and multiple ($N_R$) receive antennas for data transmission. A MIMO channel formed by the $N_T$ transmit and $N_R$ receive antennas may be decomposed into $N_S$ independent channels, which are also referred to as spatial channels, where $N_S \leq \min\{N_T, N_R\}$. Each of the $N_S$ independent channels corresponds to a dimension. The MIMO system can provide improved performance (e.g., higher throughput and/or greater reliability) if the additional dimensionalities created by the multiple transmit and receive antennas are utilized.

In wireless networks with a single Access Point (AP) and multiple user stations (STAs), concurrent transmissions may occur on multiple channels toward different stations, both in the uplink and downlink direction. Many challenges are present in such systems.

Attention is drawn to document EP 2 037 706 A2 which relates to a method for communicating in a wireless personal area network (WPAN), comprising using Spatial Division Multiple Access (SDMA) in said WPAN network by exploiting directional antennas.

## SUMMARY

In accordance with the present invention, a method and apparatus for wireless communications, as set forth in claims 1 and 8, 9, and 13, respectively, and a computer-program product as set fourth in claim 15, are provided. Further embodiments are claimed in the dependent claims.

## BRIEF DESCRIPTION OF THE DRAWINGS

So that the manner in which the above-recited features of the present disclosure can be understood in detail, a more particular description, briefly summarized above, may be had by reference to aspects, some of which are illustrated in the appended drawings. It is to be noted, however, that the appended drawings illustrate only certain typical aspects of this disclosure and are therefore not to be considered limiting of its scope, for the description may admit to other equally effective aspects.

FIG. 1 illustrates a wireless communications network in accordance with certain aspects of the present disclosure.

FIG. 2 illustrates a block diagram of an example access point and user terminals in accordance with certain aspects of the present disclosure.

FIG. 3 illustrates a block diagram of an example wireless device in accordance with certain aspects of the present disclosure.

FIG. 4 illustrates an example of wireless network with multiple simultaneous communications between transmit-receive pairs of stations (nodes) in accordance with certain aspects of the present disclosure.

FIG. 5 illustrates an example structure of a transmission super-frame in accordance with certain aspects of the present disclosure.

FIG. 6 illustrates an example protocol for scheduling multiple simultaneous communications between transmit-receive pairs of stations in a wireless network in accordance with certain aspects of the present disclosure.

FIG. 7 illustrates example operations that may be performed at an access point for scheduling multiple simultaneous communications between stations (nodes) of a wireless network in accordance with certain aspects of the present disclosure.

FIG. 7A illustrates example components capable of performing the operations illustrated in FIG. 7.

FIG. 8 illustrates example operations that may be performed at a station (node) of the wireless network in accordance with certain aspects of the present disclosure.

FIG. 8A illustrates example components capable of performing the operations illustrated in FIG. 8.

## DETAILED DESCRIPTION

Various aspects of the disclosure are described more fully hereinafter with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings herein one skilled in the art should appreciate that the scope of the disclosure is intended to cover any aspect of the disclosure disclosed herein, whether implemented independently of or combined with any other aspect of the disclosure. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. It should be understood that any aspect of the disclosure disclosed herein may be embodied by one or more elements of a claim.

The word "exemplary" is used herein to mean "serving as an example, instance, or illustration." Any aspect described herein as "exemplary" is not necessarily to be construed as preferred or advantageous over other aspects.

Although particular aspects are described herein, many variations and permutations of these aspects fall within the scope of the disclosure. Although some benefits and advantages of the preferred aspects are mentioned, the scope of the disclosure is not intended to be limited to particular benefits, uses, or objectives. Rather, aspects of the disclosure are intended to be broadly applicable to different wireless technologies, system configurations, networks, and transmission protocols, some of which are illustrated by way of example in the figures and in the following description of the preferred aspects. The detailed description and drawings are merely illustrative of the disclosure rather than limiting, the scope of the disclosure being defined by the appended claims and equivalents thereof.

## AN EXAMPLE WIRELESS COMMUNICATION SYSTEM

The techniques described herein may be used for various broadband wireless communication systems, including communication systems that are based on a single carrier transmission. Aspects disclosed herein may be advantageous to systems employing Ultra Wide Band (UWB) signals including millimeter-wave signals and 60GHz carrier frequency. However, the present disclosure is not intended to be limited to such systems, as other coded signals may benefit from similar advantages.

An access point ("AP") may comprise, be implemented as, or known as NodeB, Radio Network Controller ("RNC"), eNodeB, Base Station Controller ("BSC"), Base Transceiver Station ("BTS"), Base Station ("BS"), Transceiver Function ("TF"), Radio Router, Radio Transceiver, Basic Service Set ("BSS"), Extended Service Set ("ESS"), Radio Base Station ("RBS"), or some other terminology.

An access terminal ("AT") may comprise, be implemented as, or known as an access terminal, a subscriber station, a subscriber unit, a mobile terminal, a remote station, a remote terminal, a user terminal, a user agent, a user device, user equipment, a user station, or some other terminology. In some implementations, an access terminal may comprise a cellular telephone, a cordless telephone, a Session Initiation Protocol ("SIP") phone, a wireless local loop ("WLL") station, a personal digital assistant ("PDA"), a handheld device having wireless connection capability, a Station ("STA"), or some other suitable processing device connected to a wireless modem. Accordingly, one or more aspects taught herein may be incorporated into a phone (e.g., a cellular phone or smart phone), a computer (e.g., a laptop), a portable communication device, a portable computing device (e.g., a personal data assistant), an entertainment device (e.g., a music or video device, or a satellite radio), a global positioning system device, or any other suitable device that is configured to communicate via a wireless or wired medium. In some aspects the node is a wireless node. Such wireless node may provide, for example, connectivity for or to a network (e.g., a wide area network such as the Internet or a cellular network) via a wired or wireless communication link. The wireless node may comprise an access point or an access terminal.

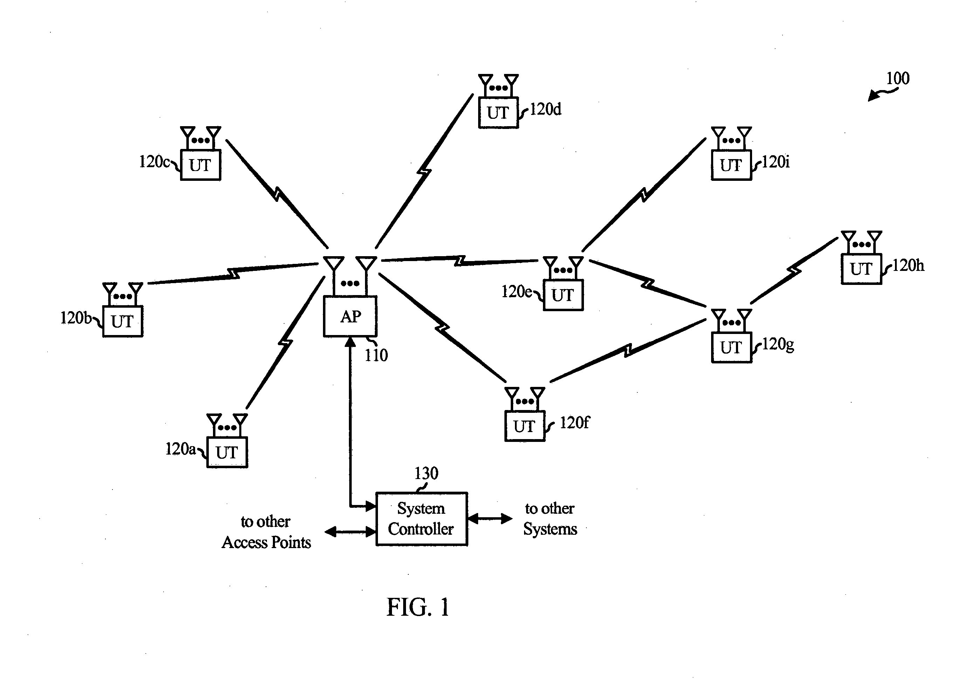

FIG. 1 illustrates a multiple-access MIMO system 100 with access points and user terminals. For simplicity, only one access point 110 is shown in FIG. 1. An access point (AP) is generally a fixed station that communicates with the user terminals and may also be referred to as a base station or some other terminology. A user terminal may be fixed or mobile and may also be referred to as a mobile station, a station (STA), a client, a wireless device, or some other terminology. A user terminal may be a wireless device, such as a cellular phone, a personal digital assistant (PDA), a handheld device, a wireless modem, a laptop computer, a personal computer, etc.

Access point 110 may communicate with one or more user terminals 120 at any given moment on the downlink and uplink. The downlink (i.e., forward link) is the communication link from the access point to the user terminals, and the uplink (i.e., reverse link) is the communication link from the user terminals to the access point. A user terminal may also communicate peer-to-peer with another user terminal. A system controller 130 couples to and provides coordination and control for the access points.

System 100 employs multiple transmit and multiple receive antennas for data transmission on the downlink and uplink. Access point 110 is equipped with a number $N_{ap}$ of antennas and represents the multiple-input (MI) for downlink transmissions and the multiple-output (MO) for uplink transmissions. A set $N_u$ of selected user terminals 120 collectively represents the multiple-output for downlink transmissions and the multiple-input for uplink transmissions. In certain cases, it may be desirable to have $N_{ap} \geq N_u \geq 1$ if the data symbol streams for the $N_u$ user terminals are not multiplexed in code, frequency or time by some means. $N_u$ may be greater than $N_{ap}$ if the data symbol streams can be multiplexed using different code channels with CDMA, disjoint sets of sub-bands with OFDM, and so on. Each selected user terminal transmits user-specific data to and/or receives user-specific data from the access point. In general, each selected user terminal may be equipped with one or multiple antennas (i.e., $N_{ut} \geq 1$). The $N_u$ selected user terminals can have the same or different number of antennas.

MIMO system 100 may be a time division duplex (TDD) system or a frequency division duplex (FDD) system. For a TDD system, the downlink and uplink share the same frequency band. For an FDD system, the downlink and uplink use different frequency bands. MIMO system 100 may also utilize a single carrier or multiple carriers for transmission. Each user terminal may be equipped with a single antenna (e.g., in order to keep costs down) or multiple antennas (e.g., where the additional cost can be supported). MIMO system 100 may represent a high speed Wireless Local Area Network (WLAN) operating in a 60GHz band.

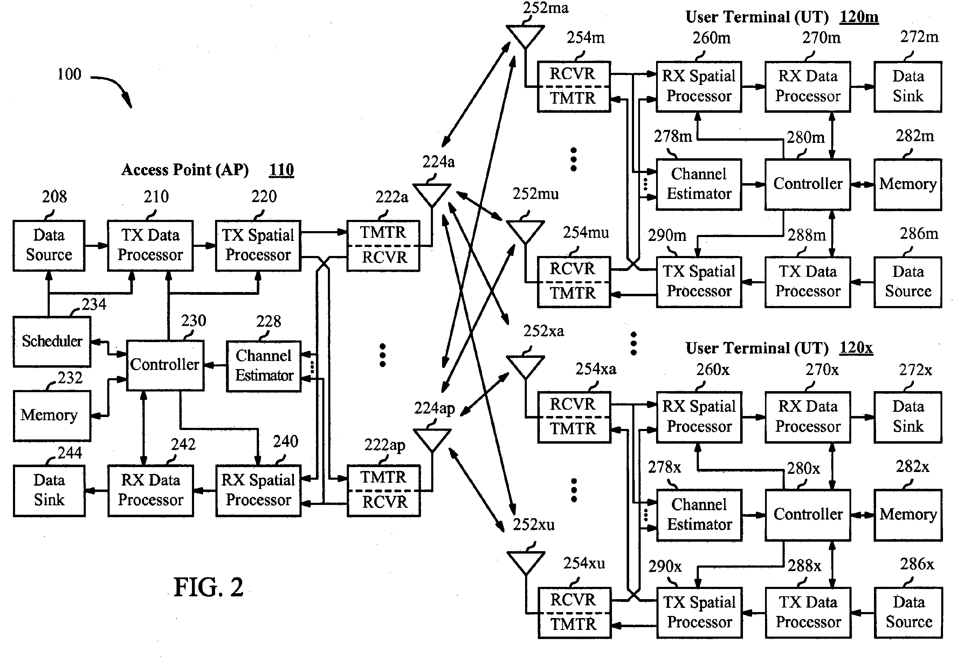

FIG. 2 shows a block diagram of access point 110 and two user terminals 120m and 120x in MIMO system 100. Access point 110 is equipped with $N_{ap}$ antennas 224a through 224ap. User terminal 120m is equipped with $N_{ut,m}$ antennas 252ma through 252mu, and user terminal 120x is equipped with $N_{ut,x}$ antennas 252xa through 252xu. Access point 110 is a transmitting entity for the downlink and a receiving entity for the uplink. Each user terminal 120 is a transmitting entity for the uplink and a receiving entity for the downlink. As used herein, a "transmitting entity" is an independently operated apparatus or device capable of transmitting data via a frequency channel, and a "receiving entity" is an independently operated apparatus or device capable of receiving data via a frequency channel. In the following description, the subscript *"dn"* denotes the downlink, the subscript *"up"* denotes the uplink, $N_{up}$ user terminals are selected for simultaneous transmission on the uplink, $N_{dn}$ user terminals are selected for simultaneous transmission on the downlink, $N_{up}$ may or may not be equal to $N_{dn}$, and $N_{up}$ and $N_{dn}$ may be static values or can change for each scheduling interval. The beam-steering or some other spatial processing technique may be used at the access point and user terminal.

On the uplink, at each user terminal 120 selected for uplink transmission, a TX data processor 288 receives traffic data from a data source 286 and control data from a controller 280. TX data processor 288 processes (e.g., encodes, interleaves, and modulates) the traffic data $\{d_{up,m}\}$ for the user terminal based on the coding and modulation schemes associated with the rate selected for the user terminal and provides a data symbol stream $\{s_{up,m}\}$. A TX spatial processor 290 performs spatial processing on the data symbol stream $\{s_{up,m}\}$ and provides $N_{ut,m}$ transmit symbol streams for the $N_{ut,m}$ antennas. Each transmitter unit (TMTR) 254 receives and processes (e.g., converts to analog, amplifies, filters, and frequency upconverts) a respective transmit symbol stream to generate an uplink signal. $N_{ut,m}$ transmitter units 254 provide $N_{ut,m}$ uplink signals for transmission from $N_{ut,m}$ antennas 252 to the access point 110.

A number $N_{up}$ of user terminals may be scheduled for simultaneous transmission on the uplink. Each of these user terminals performs spatial processing on its data symbol stream and transmits its set of transmit symbol streams on the uplink to the access point.

At access point 110, $N_{ap}$ antennas 224a through 224ap receive the uplink signals from all $N_{up}$ user terminals transmitting on the uplink. Each antenna 224 provides a received signal to a respective receiver unit (RCVR) 222. Each receiver unit 222 performs processing complementary to that performed by transmitter unit 254 and provides a received symbol stream. An RX spatial processor 240 performs receiver spatial processing on the $N_{ap}$ received symbol streams from $N_{ap}$ receiver units 222 and provides $N_{up}$ recovered uplink data symbol streams. The receiver spatial processing is performed in accordance with the channel correlation matrix inversion (CCMI), minimum mean square error (MMSE), successive interference cancellation (SIC), or some other technique. Each recovered uplink data symbol stream $\{s_{up,m}\}$ is an estimate of a data symbol stream $\{s_{up,m}\}$ transmitted by a respective user terminal. An RX data processor 242 processes (e.g., demodulates, deinterleaves, and decodes) each recovered uplink data symbol stream $\{s_{up,m}\}$ in accordance with the rate used for that stream to obtain decoded data. The decoded data for each user terminal may be provided to a data sink 244 for storage and/or a controller 230 for further processing.

On the downlink, at access point 110, a TX data processor 210 receives traffic data from a data source 208 for $N_{dn}$ user terminals scheduled for downlink transmission, control data from a controller 230, and possibly other data from a scheduler 234. The various types of data may be sent on different transport channels. TX data processor 210 processes (e.g., encodes, interleaves, and modulates) the traffic data for each user terminal based on the rate selected for that user terminal. TX data processor 210 provides $N_{dn}$ downlink data symbol streams for the $N_{dn}$ user terminals. A TX spatial processor 220 performs spatial processing on the $N_{dn}$ downlink data symbol streams, and provides $N_{ap}$ transmit symbol streams for the $N_{ap}$ antennas. Each transmitter unit (TMTR) 222 receives and processes a respective transmit symbol stream to generate a downlink signal. $N_{ap}$ transmitter units 222 provide $N_{ap}$ downlink signals for transmission from $N_{ap}$ antennas 224 to the user terminals.

At each user terminal 120, $N_{ut,m}$ antennas 252 receive the $N_{ap}$ downlink signals from access point 110. Each receiver unit (RCVR) 254 processes a received signal from an associated antenna 252 and provides a received symbol stream. An RX spatial processor 260 performs receiver spatial processing on $N_{ut,m}$ received symbol streams from $N_{ut,m}$ receiver units 254 and provides a recovered downlink data symbol stream $\{s_{dn,m}\}$ for the user terminal. The receiver spatial processing is performed in accordance with the CCMI, MMSE, or some other technique. An RX data processor 270 processes (e.g., demodulates, deinterleaves, and decodes) the recovered downlink data symbol stream to obtain decoded data for the user terminal.

At each user terminal 120, $N_{ut,m}$ antennas 252 receive the $N_{ap}$ downlink signals from access point 110. Each receiver unit (RCVR) 254 processes a received signal from an associated antenna 252 and provides a received symbol stream. An RX spatial processor 260 performs receiver spatial processing on $N_{ut,m}$ received symbol streams from $N_{ut,m}$ receiver units 254 and provides a recovered downlink data symbol stream $\{S_{dn,m}\}$ for the user terminal. The receiver spatial processing is performed in accordance with the CCMI, MMSE, or some other technique. An RX data processor 270 processes (e.g., demodulates, deinterleaves, and decodes) the recovered downlink data symbol stream to obtain decoded data for the user terminal.

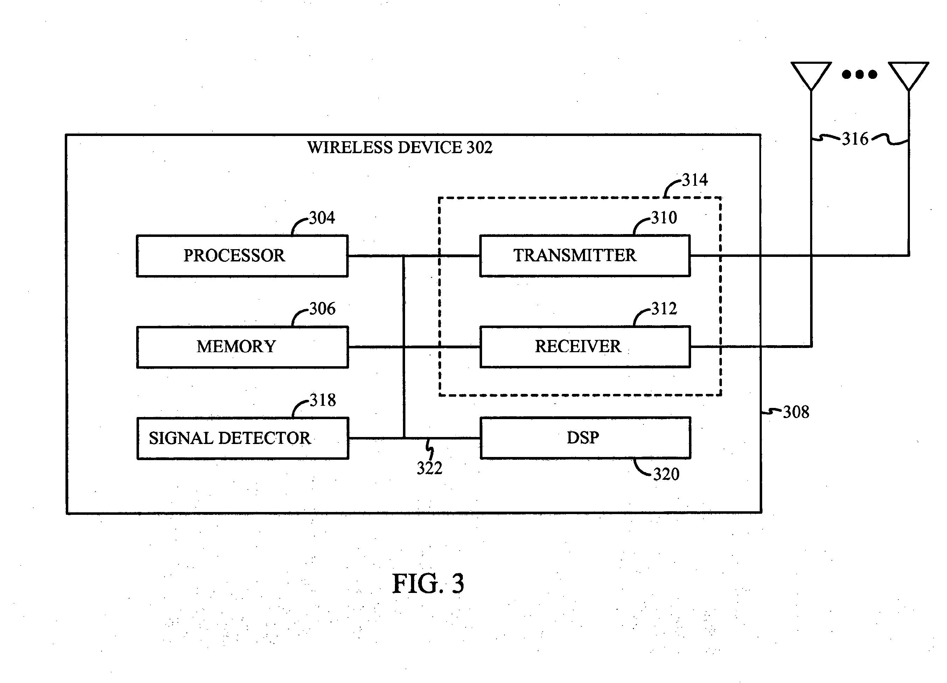

FIG. 3 illustrates various components that may be utilized in a wireless device 302 that may be employed within the system 100. The wireless device 302 is an example of a device that may be configured to implement the various methods described herein. The wireless device 302 may be an access point 110 or a user terminal 120.

The wireless device 302 may include a processor 304 which controls operation of the wireless device 302. The processor 304 may also be referred to as a central processing unit (CPU). Memory 306, which may include both read-only memory (ROM) and random access memory (RAM), provides instructions and data to the processor 304. A portion of the memory 306 may also include non-volatile random access memory (NVRAM). The processor 304 typically performs logical and arithmetic operations based on program instructions stored within the memory 306. The instructions in the memory 306 may be executable to implement the methods described herein.

The wireless device 302 may also include a housing 308 that may include a transmitter 310 and a receiver 312 to allow transmission and reception of data between the wireless device 302 and a remote location. The transmitter 310 and receiver 312 may be combined into a transceiver 314. A plurality of transmit antennas 316 may be attached to the housing 308 and electrically coupled to the transceiver 314. The wireless device 302 may also include (not shown) multiple transmitters, multiple receivers, and multiple transceivers.

The wireless device 302 may also include a signal detector 318 that may be used in an effort to detect and quantify the level of signals received by the transceiver 314. The signal detector 318 may detect such signals as total energy, energy per subcarrier per symbol, power spectral density and other signals. The wireless device 302 may also include a digital signal processor (DSP) 320 for use in processing signals.

The various components of the wireless device 302 may be coupled together by a bus system 322, which may include a power bus, a control signal bus, and a status signal bus in addition to a data bus.

In a wireless network that utilizes a 60GHz carrier (e.g., the wireless network from FIG. 1), directional transmissions may be required to achieve higher data rates. Additional network efficiency may be attained by simultaneously scheduling spatially separated transmit-receive pairs of user terminals (e.g., the user terminals 120 from FIG. 1), if the individual transmissions do not interfere at their respective destinations. The present disclosure proposes a protocol to enable scheduling multiple transmit-receive pairs of user terminals. It should be noted that the proposed protocol can be also applied to other wireless networks, and not only to the 60GHz wireless network.

PROTOCOL FOR SCHEDULING SIMULTANEOUS TRANSMISSIONS

Certain aspects of the present disclosure support using a sequence of short directional messages to determine a set of transmit-receive pairs of wireless nodes (user stations) that may be simultaneously scheduled for communication. Therefore, with a low time overhead, several transmit-receive pairs of user stations (STAs) may be simultaneously scheduled thus ensuring high system efficiency.

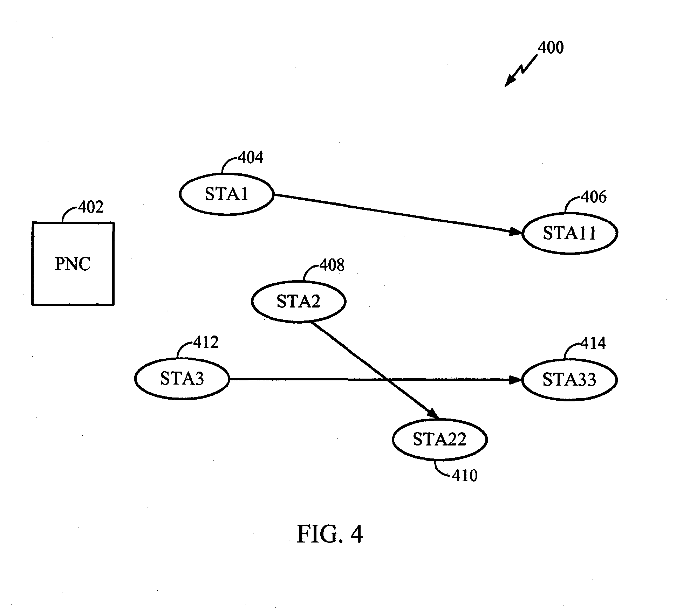

FIG. 4 illustrates an example of wireless network 400 (e.g., a piconet operating with a carrier of 60GHz) in accordance with certain aspects of the present disclosure. The network 400 may comprise a piconet controller (PNC) 402 that may operate as an access point (AP), and may comprise several user STAs. As illustrated in FIG. 4, a STA 404 may communicate with a STA 406, a STA 408 may communicate with a STA 410, and a STA 412 may communicate with a STA 414. If each of these communications does not cause unacceptable level of interference to other STAs in the network, the STAs 404, 408 and 412 may be scheduled for simultaneous transmissions.

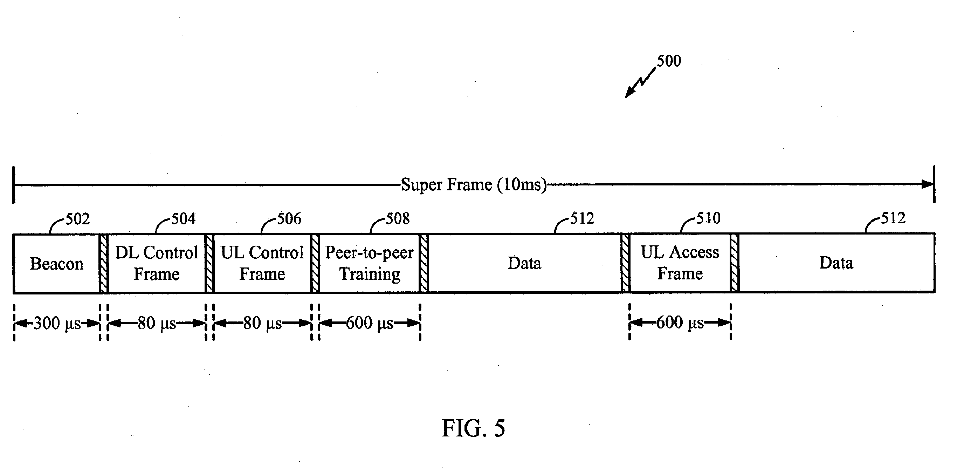

FIG. 5 illustrates an example structure of a super-frame 500 that may be transmitted from the AP 402 in accordance with certain aspects of the present disclosure. The AP 402 may transmit a beacon 502 every super-frame interval (e.g., every 10ms). The super-frame 500 may comprise a downlink (DL) control frame 504, an uplink (UL) control frame 506, a peer-to-peer training field 508 for training of communicating STAs, an UL access frame 510 used by new STAs for association with the AP, and data 512.

During the data transmission, it may be possible to schedule AP-to-STA transmissions and STA-to-STA transmissions. In the case when only a single transmitter/receiver pair (e.g., a pair of STAs, or an AP-STA pair) is allowed to communicate at any given time, the transmission schedule may be communicated in the DL control frame 504.

Certain aspects of the present disclosure support augmenting the above protocol to enable multiple simultaneous communications. One example of such a protocol builds upon the existing super-frame structure from FIG. 5.

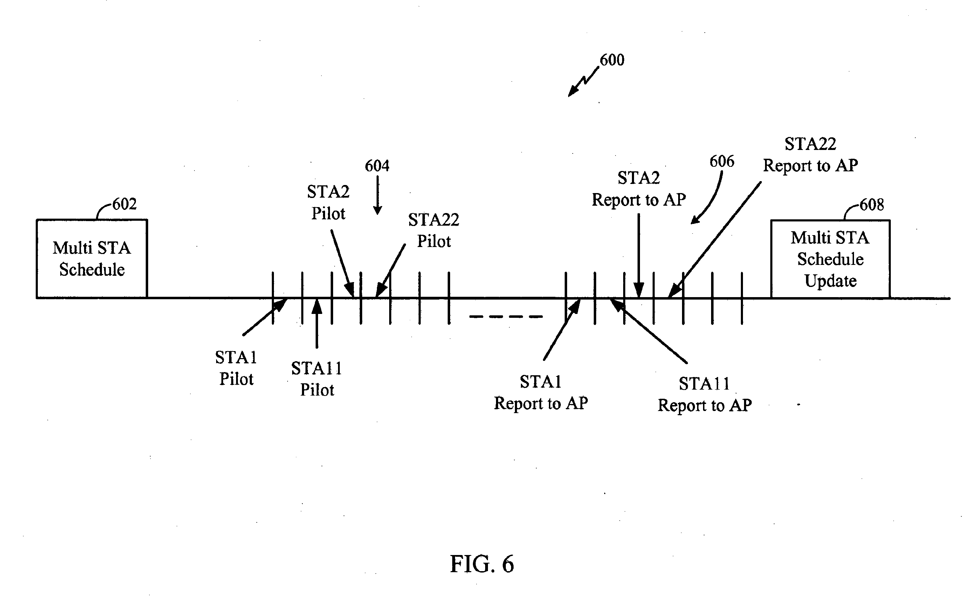

FIG. 6 illustrates an example protocol 600 for scheduling multiple simultaneous communications between transmit-receive pairs of STAs in a wireless network in accordance with certain aspects of the present disclosure. Initially, the AP may transmit a schedule 602 identifying a sequence of n transmit-receive (Tx/Rx) pairs of STAs. In one aspect of the present disclosure, the schedule 602 may be transmitted within a broadcast message to all STAs from the set of n Tx/Rx pairs. In another aspect, the schedule 602 may comprise a plurality of unicast schedules, wherein each of the unicast schedules may be dedicated to a different STA from the set of n Tx/Rx pairs of STAs. In yet another aspect, the schedule 602 may be transmitted to each of the STAs by transmitting one or more polling messages from the AP.

Following the transmission of schedule 602, the AP may open up 2n time slots 604 in which each STA from the set of n Tx/Rx pairs may transmit a short "pilot" sequence in order specified by the schedule message 602. Each pilot sequence may be transmitted by a STA in a direction of its communicating peer, and may comprise either a data packet or a control message. All other STAs from the set of Tx/Rx pairs identified by the schedule 602 may measure a received signal power of the pilot transmission from that STA.

After the pilot transmissions, as illustrated in FIG. 6, the AP may open up 2n time slots 606 during which each STA from the set of Tx/Rx pairs of STAs may transmit a report to the AP about a measured power of a pilot transmission for each transmitter. At this point, the AP may possess all required information to select, for simultaneous communications, a subset of Tx/Rx pairs of STAs from the initial set of Tx/Rx pairs in an effort to meet a desired criterion. In one aspect of the present disclosure, the AP may choose the subset of Tx/Rx pairs such that a sum of transmission throughputs is maximized. After this, the AP may transmit a schedule 608 identifying the chosen subset of Tx/Rx pairs of STAs scheduled for simultaneous communications.

It should be noted that complexity of choosing the exact subset of STAs for simultaneous communications may directly depend on the optimizing criterion for multi-station scheduling. For certain aspects, the pilot transmissions and STAs' power measurement reports for the AP may be transmitted using a directional transmission. Therefore, each of these transmission messages may incur a low time overhead, which may make the proposed protocol for enabling multiple simultaneous communications highly efficient.

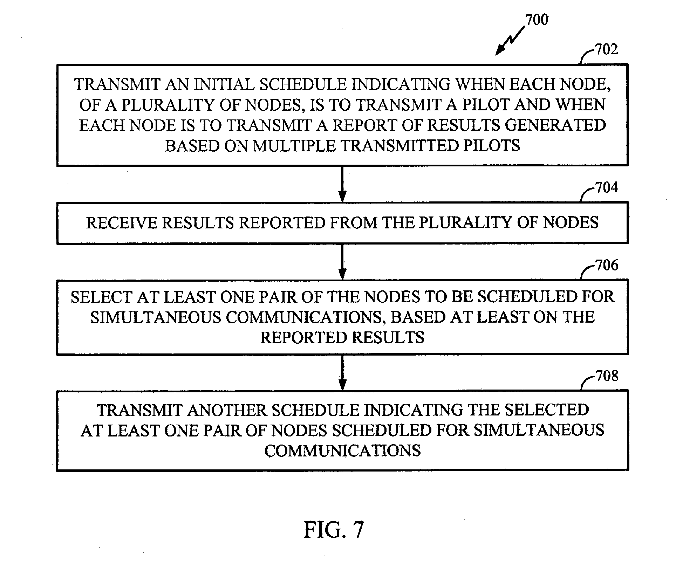

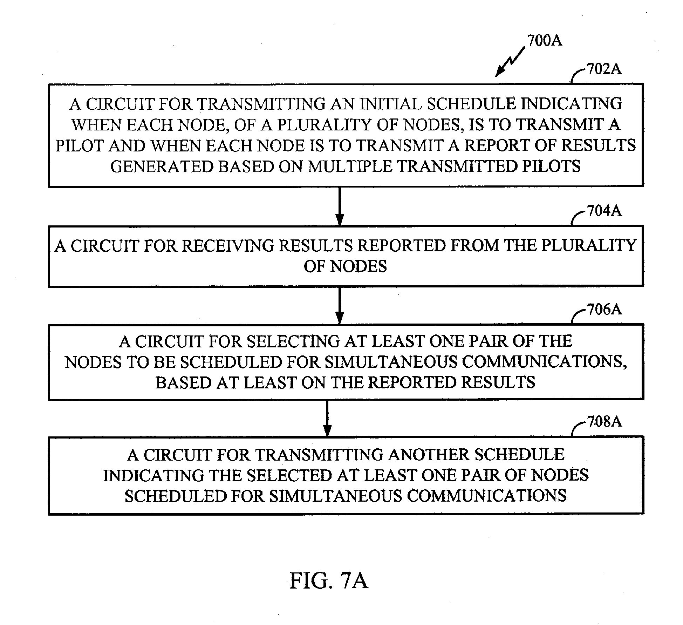

FIG. 7 illustrates example operations 700 that may be performed at an AP for scheduling multiple simultaneous communications between stations (wireless nodes or apparatuses) of a wireless network in accordance with certain aspects of the present disclosure. At 702, the AP may transmit an initial schedule indicating when each apparatus, of a plurality of apparatuses, is to transmit a pilot and when each apparatus is to transmit a report of results generated based on multiple transmitted pilots. The initial schedule may also indicate to Tx/Rx pairs of stations that they may communicate with each other. Further, the initial schedule may comprise a list of the apparatuses ordered for scheduling according to a priority of each apparatus.

At 704, the AP may receive reports of results from the plurality of apparatuses. The initial schedule may comprise a sequence of time slots for the apparatuses to transmit the reports of results associated with the pilots received at the apparatuses. The results may comprise received power of the pilots transmitted by each of the apparatuses. The results reported by at least one of the apparatuses may indicate at least one apparatus with a lower priority than the reporting apparatus whose pilot is received at the reporting apparatus with a power lower than a threshold value. Therefore, while communicating, this lower priority node may not cause unacceptable interference during communication of the reporting apparatus with its peer. Each of the results reported by each of the apparatuses may comprise information about interference caused by one or more of the pilots received at that apparatus.

At 706, the AP may select at least one pair of the apparatuses to be scheduled for simultaneous communications, based at least in part on the reported results. At 708, the AP may transmit another schedule indicating the selected at least one pair of apparatuses scheduled for simultaneous communications. It should be noted that the operations 700 described in FIG. 7 may be performed by any scheduling apparatus.

For example, in an aspect, the AP may choose one or more pairs of apparatuses for simultaneous communications based on at least one of: the initial schedule, optimization criteria, or the power reports received from the nodes. In another aspect, the selection of a preferred subset of apparatuses to be scheduled for simultaneous communications may be based on optimizing a performance metric associated with each of the apparatuses. One example of the performance metric may be a total throughput in the wireless network when the selected apparatuses are simultaneously transmitting. In yet another aspect, selecting the at least one pair of apparatuses may comprise determining, based on priority of traffics of the apparatuses, a preferred subset of the apparatuses to be scheduled for simultaneous transmissions.

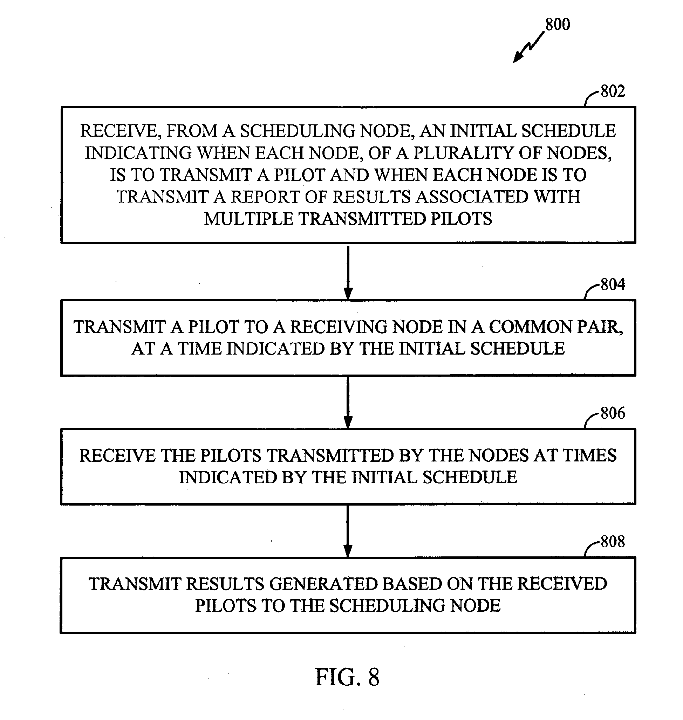

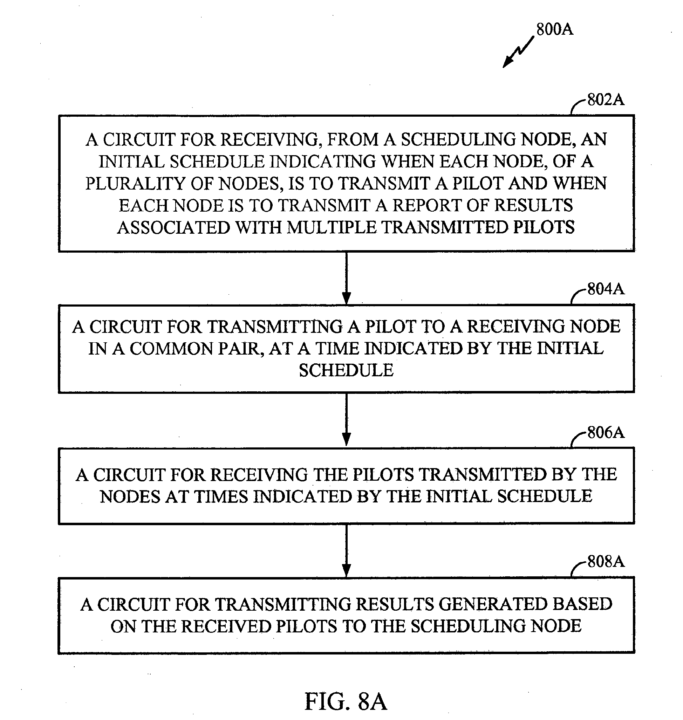

FIG. 8 illustrates example operations 800 that may be performed at a STA of a plurality of STAs in a wireless network in accordance with certain aspects of the present disclosure. At 802, the STA may receive, from a scheduling node, an initial schedule indicating when each STA, of the plurality of STAs, is to transmit a pilot and when each STA is to transmit a report of results associated with multiple transmitted pilots. The STA may receive the initial schedule from an AP, which may include order of STAs and pairs of STAs that may communicate with each other.

At 804, the STA may transmit a pilot to a receiving STA in a common pair at a time indicated by the initial schedule. At 806, the STA may receive the pilots transmitted by other STAs of the plurality of STAs at times indicated by the initial schedule. The STA may measure power of the pilots received from the other STAs and send a report to the AP. At 808, the STA may transmit results generated based on the received pilots to the scheduling node.

It should be noted that the initial schedule may comprise a list of the STAs ordered for scheduling according to a priority of each STA. At least one of the transmitted results may indicate at least one STA from the list having a lower priority than the STA transmitting the results, wherein at least one pilot of the at least one STA from the list may be received with a power equal to or lower than a threshold value. Further, the STA may receive another schedule from the scheduling node comprising one or more pairs of STAs selected from the plurality of STAs scheduled for simultaneous communications. In an aspect, the pairs of STAs may be selected for simultaneous communications based on priority of traffics of the STAs.

METHODS FOR CHOOSING SUBSET OF STATIONS FOR SIMULTANEOUS

COMMUNICATIONS

Computational complexity of determining a preferred combination of STAs scheduled for simultaneous communication in order to optimize a given criterion (e.g., a total network throughput) may be high. Certain methods are proposed in the present disclosure to simplify the determination of preferred subset of STAs, and to make this optimization problem more tractable.

Certain aspects of the present disclosure support centralized methods for choosing the preferred subset of STAs for simultaneous communications. In one aspect, an AP may *a priori* decide that it may need to schedule at least r STAs of originally chosen N STAs. Then, a number of possible subsets of STAs may be given by:

$$\sum_{i=1}^{r} C_i^N \, . \qquad\qquad (1)$$

For small values of $N$, the number of combinations of subsets of STAs given by equation (1) may be tractable.

In another aspect, the AP may order the $N$ STAs in a priority manner. After scheduling a first STA of the $N$ STAs, the AP may check if a second STA of the $N$ STAs can be scheduled without affecting the first STA. If the second STA can be scheduled, then the AP may add the second STA to a list of scheduled STAs. Following this, the AP may also add a third STA of the $N$ STAs to the list of scheduled STAs, if the scheduling of the third STA does not diminish a throughput of the first and second STAs, and so on.

Certain aspects of the present disclosure support a decentralized method for choosing a preferred subset of STAs for simultaneous communications. Initially, the AP may order the STAs to be scheduled in a priority list, and then the AP may send the priority list within a first multi-STA schedule (e.g., within the schedule 602 from FIG. 6). Then, based on the prioritized list, each STA may determine which STAs of lower priorities than a priority of that STA may be allowed for simultaneous transmissions, so that the STA's own communication may be successfully performed and may not be affected by interference.

Following this, each STA may send its own list of "allowed" STAs back to the AP. The AP may determine an "intersection" of all the lists received from all the STAs. Those STAs from the "intersection" may be allowed to communicate simultaneously. For this decentralized method of choosing the preferred subset of STAs for simultaneous communications, it can be observed that the AP may not perform any complex calculations.

The various operations of methods described above may be performed by any suitable means capable of performing the corresponding functions. The means may include various hardware and/or software component(s) and/or module(s), including, but not limited to a circuit, an application specific integrate circuit (ASIC), or processor. Generally, where there are operations illustrated in Figures, those operations may have corresponding counterpart means-plus-function components with similar numbering. For example, operations 700 and 800 illustrated in FIG. 7 and FIG. 8 correspond to components 700A and 800A illustrated in FIG. 7A and 8A.

As used herein, the term "determining" encompasses a wide variety of actions. For example, "determining" may include calculating, computing, processing, deriving, investigating, looking up (e.g., looking up in a table, a database or another data structure), ascertaining and the like. Also, "determining" may include receiving (e.g., receiving information), accessing (e.g., accessing data in a memory) and the like. Also, "determining" may include resolving, selecting, choosing, establishing and the like.

As used herein, a phrase referring to "at least one of" a list of items refers to any combination of those items, including single members. As an example, "at least one of: *a, b,* or c" is intended to cover: *a, b,* c, *a-b, a-c, b-c, and a-b-c.*

The various operations of methods described above may be performed by any suitable means capable of performing the operations, such as various hardware and/or software component (s) , circuits, and/or module (s) . Generally, any operations illustrated in the Figures may be performed by corresponding functional means capable of performing the operations.

The means for transmitting may comprise a transmitter, e.g., the transmitter 222 from FIG. 2 of the access point 110, the transmitter 254 from FIG. 2 of the user terminal 120, or the transmitter 310 from FIG. 3 of the wireless device 302. The means for receiving may comprise a receiver, e.g., the receiver 222 from FIG. 2 of the access point 110, the receiver 254 from FIG. 2 of the user terminal 120, or the receiver 312 from FIG. 3 of the wireless device 302. The means for selecting may comprise a processor, e.g., the processor 242 from FIG. 2 of the access point 110; or the processor 304 from FIG. 3 of the wireless device 302. The means for determining may comprise a processor, e.g., the processor 242 from FIG. 2 of the access point 110, or the processor 304 from FIG. 3 of the wireless device 302.

The various illustrative logical blocks, modules and circuits described in connection with the present disclosure may be implemented or performed with a general purpose processor, a digital signal processor (DSP), an application specific integrated circuit (ASIC), a field programmable gate array signal (FPGA) or other programmable logic device (PLD), discrete gate or transistor logic, discrete hardware components or any combination thereof designed to perform the functions described herein. A general purpose processor may be a microprocessor, but in the alternative, the processor may be any commercially available processor, controller, microcontroller or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the present disclosure may be embodied directly in hardware, in a software module executed by a processor, or in a combination of the two. A software module may reside in any form of storage medium that is known in the art. Some examples of storage media that may be used include random access memory (RAM), read only memory (ROM), flash memory, EPROM memory, EEPROM memory, registers, a hard disk, a removable disk, a CD-ROM and so forth. A software module may comprise a single instruction, or many instructions, and may be distributed over several different code segments, among different programs, and across multiple storage media. A storage medium may be coupled to a processor such that the processor can read information from, and write information to, the storage medium. In the alternative, the storage medium may be integral to the processor.

The methods disclosed herein comprise one or more steps or actions for achieving the described method. The method steps and/or actions may be interchanged with one another without departing from the scope of the claims. In other words, unless a specific order of steps or actions is specified, the order and/or use of specific steps and/or actions may be modified without departing from the scope of the claims.

The functions described may be implemented in hardware, software, firmware or any combination thereof. If implemented in software, the functions may be stored as one or more instructions on a computer-readable medium. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk and Blu-ray® disc where disks usually reproduce data magnetically, while discs reproduce data optically with lasers.

Thus, certain aspects may comprise a computer program product for performing the operations presented herein. For example, such a computer program product may comprise a computer readable medium having instructions stored (and/or encoded) thereon, the instructions being executable by one or more processors to perform the operations described herein. For certain aspects, the computer program product may include packaging material.

Software or instructions may also be transmitted over a transmission medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of transmission medium.

Further, it should be appreciated that modules and/or other appropriate means for performing the methods and techniques described herein can be downloaded and/or otherwise obtained by a user terminal and/or base station as applicable. For example, such a device can be coupled to a server to facilitate the transfer of means for performing the methods described herein. Alternatively, various methods described herein can be provided via storage means (e.g., RAM, ROM, a physical storage medium such as a compact disc (CD) or floppy disk, etc.) , such that a user terminal and/or base station can obtain the various methods upon coupling or providing the storage means to the device. Moreover, any other suitable technique for providing the methods and techniques described herein to a device can be utilized.

It is to be understood that the claims are not limited to the precise configuration and components illustrated above. Various modifications, changes and variations may be made in the arrangement, operation and details of the methods and apparatus described above without departing from the scope of the appended claims.

While the foregoing is directed to aspects of the present disclosure, other and further aspects of the disclosure may be devised without departing from the scope thereof as defined by the claims that follow.

## Claims

1. A method (700) for wireless communications, comprising:

   transmitting (702) an initial schedule indicating when each apparatus, of a plurality of apparatuses, is to transmit a pilot and when each apparatus is to transmit a report of results generated based on multiple transmitted pilots, wherein the initial schedule comprises pairs of the apparatuses and, for each of the pairs, a receiving apparatus in that pair to which one of the pilots is to be transmitted;
   receiving (704) results reported from the plurality of apparatuses;
   selecting (706) at least one pair of the apparatuses to be scheduled for simultaneous communications, based at least on the reported results; and
   transmitting (708) another schedule indicating the selected at least one pair of apparatuses scheduled for simultaneous communications.

2. The method (700) of claim 1, wherein the initial schedule comprises a sequence of time slots for the apparatuses to transmit the reports of results associated with the pilots received at the apparatuses.

3. The method (700) of claim 1, wherein each of the results reported by each of the apparatuses comprises information about interference caused by one or more of the pilots received at that apparatus.

4. The method (700) of claims 1, wherein selecting comprises:

   determining, based on a performance metric and/or based on priority of traffics of the apparatuses, a preferred subset of the apparatuses to be scheduled for simultaneous transmissions.

5. The method (700) of claim 1, wherein the initial schedule comprises a list of the apparatuses ordered for scheduling according to a priority of each apparatus.

6. The method (700) of claim 1, wherein the initial schedule is communicated to all the apparatuses by transmitting a broadcast message with the initial schedule.

7. The method (700) of claim 1, wherein:

   the initial schedule comprises a plurality of unicast schedules, and
   each of the unicast schedules is transmitted to a different apparatus of the plurality of apparatuses.

8. An apparatus (700A) for wireless communications, comprising:

   means for transmitting (702A) an initial schedule indicating when each apparatus, of a plurality of apparatuses, is to transmit a pilot and when each apparatus is to transmit a report of results generated based on multiple transmitted pilots, wherein the initial schedule comprises pairs of the apparatuses and, for each of the pairs, a receiving apparatus in that pair to which one of the pilots is to be transmitted;

means for receiving (704A) results reported from the plurality of apparatuses; and

means for selecting (706A) at least one pair of the apparatuses to be scheduled for simultaneous communications, based at least on the reported results, wherein

the means for transmitting (708A) is further configured to transmit another schedule indicating the selected at least one pair of apparatuses scheduled for simultaneous communications.

9. A method (800) for wireless communications, comprising:

receiving (802), from a scheduling apparatus, an initial schedule indicating when each apparatus, of a plurality of apparatuses, is to transmit a pilot and when each apparatus is to transmit a report of results associated with multiple transmitted pilots, wherein the initial schedule comprises pairs of the apparatuses and, for each of the pairs, a receiving apparatus in that pair to which one of the pilots is to be transmitted;
transmitting (804) a pilot to a receiving apparatus in a common pair, at a time indicated by the initial schedule;
receiving (806) the pilots transmitted by the apparatuses at times indicated by the initial schedule;
transmitting (808) results generated based on the received pilots to the scheduling apparatus;
receiving another schedule from the scheduling apparatus comprising one or more pairs of the apparatuses scheduled for simultaneous communications; and
transmitting data to the receiving apparatus simultaneously with transmission of data by at least one apparatus of the pairs of apparatuses specified in the other schedule.

10. The method (800) of claim 9, wherein transmitting the results generated based on the received pilots comprises:

transmitting the results to the scheduling apparatus using a directional transmission.

11. The method (800) of claim 9, wherein transmitting the pilot to the receiving apparatus in the common pair comprises:

transmitting the pilot using a directional transmission.

12. The method (800) of claim 9, wherein the pilot transmitted to the receiving apparatus comprises a data packet or a control message.

13. The method (800) of claim 9, wherein:

the initial schedule comprises a list of the apparatuses ordered for scheduling according to a priority of each apparatus,
at least one of the results indicates at least one apparatus from the list having a lower priority than an apparatus transmitting the results, and
at least one pilot of the at least one apparatus from the list is received with a power equal to or lower than a threshold value.

14. An apparatus (800A) for wireless communications, comprising:

means for receiving (802A), from a scheduling apparatus, an initial schedule indicating when each apparatus, of a plurality of apparatuses, is to transmit a pilot and when each apparatus is to transmit a report of results associated with multiple transmitted pilots, wherein the initial schedule comprises pairs of the apparatuses and, for each of the pairs, a receiving apparatus in that pair to which one of the pilots is to be transmitted;
means for transmitting (804A) a pilot to a receiving apparatus in a common pair, at a time indicated by the initial schedule, wherein
the means for receiving (806A) is further configured to receive the pilots transmitted by the apparatuses at times indicated by the initial schedule, and
the means for transmitting (808A) is further configured to transmit results generated based on the received pilots to the scheduling apparatus;
the means for receiving is further configured to receive another schedule from the scheduling apparatus comprising one or more pairs of the apparatuses scheduled for simultaneous communications; and
the means for transmitting is further configured to transmit data to the receiving apparatus simultaneously with transmission of data by at least one apparatus of the pairs of apparatuses specified in the other schedule.

**15.** A computer-program product for wireless communications, comprising a computer-readable medium comprising instructions executable to perform the method of any one of claims 1 to 7 or 9 to 13.

**Patentansprüche**

**1.** Ein Verfahren (700) für drahtlose Kommunikationen, wobei das Verfahren folgende Schritte aufweist:

Senden (702) eines anfänglichen Plans, der angibt, wann jede Vorrichtung aus einer Vielzahl von Vorrichtungen einen Piloten senden soll und wann jede Vorrichtung einen Bericht über basierend auf mehreren gesendeten Piloten erzeugte Ergebnisse senden soll, wobei der anfängliche Plan Paare der Vorrichtungen und für jedes der Paare eine empfangende Vorrichtung in dem Paar, an die einer der Piloten zu senden ist, aufweist,
Empfangen (704) von Ergebnissen, die von der Vielzahl von Vorrichtungen berichtet werden,
Auswählen (706) wenigstens eines Paars der für gleichzeitige Kommunikationen zu planenden Vorrichtungen basierend wenigstens auf den berichteten Ergebnissen, und
Senden (708) eines weiteren Plans, der das ausgewählte wenigstens eine Paar von für gleichzeitige Kommunikationen geplanten Vorrichtungen angibt.

**2.** Verfahren (700) nach Anspruch 1, wobei der anfängliche Plan eine Sequenz von Zeitschlitzen für die Vorrichtungen zum Senden der Berichte über Ergebnisse, die mit den an den Vorrichtungen empfangenen Piloten assoziiert sind, aufweist.

**3.** Verfahren (700) nach Anspruch 1, wobei jedes der durch jede der Vorrichtungen berichteten Ergebnisse Informationen zu einer Interferenz, die durch einen oder mehrere der an der Vorrichtung empfangenen Piloten verursacht wird, aufweist.

**4.** Verfahren (700) nach Anspruch 1, wobei das Auswählen aufweist:

Bestimmen, basierend auf einer Performancemetrik und/oder basierend auf einer Priorität von Verkehr der Vorrichtungen, eines bevorzugten Teilsatzes der für gleichzeitige Sendungen zu planenden Vorrichtungen.

**5.** Verfahren (700) nach Anspruch 1, wobei der anfängliche Plan eine Liste der Vorrichtungen aufweist, die für eine Planung gemäß einer Priorität jeder Vorrichtung geordnet ist.

**6.** Verfahren (700) nach Anspruch 1, wobei der anfängliche Plan an alle Vorrichtungen kommuniziert wird, indem eine Broadcast-Nachricht mit dem anfänglichen Plan gesendet wird.

**7.** Verfahren (700) nach Anspruch 1, wobei:

der anfängliche Plan eine Vielzahl von Unicast-Plänen aufweist, und
jeder der Unicast-Pläne an eine andere Vorrichtung aus der Vielzahl von Vorrichtungen gesendet wird.

**8.** Vorrichtung (700A) für drahtlose Kommunikationen, wobei die Vorrichtung aufweist:

Mittel (702A) zum Senden eines anfänglichen Plans, der angibt, wann jede Vorrichtung aus einer Vielzahl von Vorrichtungen einen Piloten senden soll und wann jede Vorrichtung einen Bericht über basierend auf mehreren gesendeten Piloten erzeugte Ergebnisse senden soll, wobei der anfängliche Plan Paare der Vorrichtungen und für jedes der Paare eine empfangende Vorrichtung in dem Paar, an die einer der Piloten zu senden ist, aufweist,
Mittel (704A) zum Empfangen von Ergebnissen, die von der Vielzahl von Vorrichtungen berichtet werden, und
Mittel (706A) zum Auswählen wenigstens eines Paars der für gleichzeitige Kommunikationen zu planenden Vorrichtungen basierend auf wenigstens den berichteten Ergebnissen, wobei
die Mittel (708A) zum Senden weiterhin konfiguriert sind zum Senden eines weiteren Plans, der das ausgewählte wenigstens eine Paar von für gleichzeitige Kommunikationen geplanten Vorrichtungen angibt.

**9.** Ein Verfahren (800) für drahtlose Kommunikationen, das folgende Schritte aufweist:

Empfangen (802), von einer planenden Vorrichtung, eines anfänglichen Plans, der angibt, wann jede Vorrichtung aus einer Vielzahl von Vorrichtungen einen Piloten senden soll und wann jede Vorrichtung einen Bericht über mit mehreren gesendeten Piloten assoziierte Ergebnisse senden soll, wobei der anfängliche Plan Paare der Vorrichtungen und für jedes der Paare eine empfangende Vorrichtung in dem Paar, an die einer der Piloten zu senden ist, aufweist,

Senden (804) eines Piloten an eine empfangende Vorrichtung in einem gemeinsamen Paar zu dem durch den anfänglichen Plan angegebenen Zeitpunkt,

Empfangen (806) der Piloten, die durch die Vorrichtungen zu den durch den anfänglichen Plan angegebenen Zeitpunkten gesendet werden,

Senden (808) von Ergebnissen, die basierend auf den empfangenen Piloten erzeugt werden, an die planende Vorrichtung,

Empfangen eines weiteren Plans von der planenden Vorrichtung, der ein oder mehrere Paare der für gleichzeitige Kommunikationen geplanten Vorrichtungen aufweist, und

Senden von Daten an die empfangende Vorrichtung gleichzeitig zu dem Senden von Daten durch wenigstens eine Vorrichtung der in dem weiteren Plan spezifizierten Paare von Vorrichtungen.

10. Verfahren (800) nach Anspruch 9, wobei das Senden der basierend auf den empfangenen Piloten erzeugten Ergebnisse aufweist:

Senden der Ergebnisse an die planende Vorrichtung unter Verwendung einer gerichteten Sendung.

11. Verfahren (800) nach Anspruch 9, wobei das Senden des Piloten an die empfangende Vorrichtung in dem gemeinsamen Paar aufweist:

Senden des Piloten unter Verwendung einer gerichteten Sendung.

12. Verfahren (800) nach Anspruch 9, wobei der an die empfangende Vorrichtung gesendete Pilot ein Datenpaket oder eine Steuernachricht aufweist.

13. Verfahren (800) nach Anspruch 9, wobei:

der anfängliche Plan eine Liste der Vorrichtungen aufweist, die für das Planen gemäß einer Priorität jeder Vorrichtung geordnet ist,

wenigstens eines der Ergebnisse wenigstens eine Vorrichtung aus der Liste angibt, die eine niedrigere Priorität als eine die Ergebnisse sendende Vorrichtung aufweist, und

wenigstens ein Pilot der wenigstens einen Vorrichtung aus der Liste mit einer Leistung empfangen wird, die gleich oder kleiner als ein Schwellwert ist.

14. Eine Vorrichtung (800A) für drahtlose Kommunikationen, wobei die Vorrichtung aufweist:

Mittel (802A) zum Empfangen, von einer planenden Vorrichtung, eines anfänglichen Plans, der angibt, wann jede Vorrichtung aus einer Vielzahl von Vorrichtungen einen Piloten senden soll und wann jede Vorrichtung einen Bericht über mit mehreren gesendeten Piloten assoziierte Ergebnisse senden soll, wobei der anfängliche Plan Paare der Vorrichtungen und für jedes der Paare eine empfangende Vorrichtung in dem Paar, an die einer der Piloten zu senden ist, aufweist,

Mittel zum Senden (804A) eines Piloten an eine empfangende Vorrichtung in einem gemeinsamen Paar zu einem durch den anfänglichen Plan angegebenen Zeitpunkt, wobei

die Mittel (806A) zum Empfangen weiterhin konfiguriert sind, um die durch die Vorrichtungen zu den durch den anfänglichen Plan angegebenen Zeitpunkten gesendeten Piloten zu empfangen, und

die Mittel (808A) zum Senden weiterhin konfiguriert sind, um basierend auf den empfangenen Piloten erzeugte Ergebnisse an die planende Vorrichtung zu senden,

wobei die Mittel zum Empfangen weiterhin konfiguriert sind, um einen weiteren Plan von der planenden Vorrichtung zu empfangen, der ein oder mehrere Paare der für gleichzeitige Kommunikationen geplanten Vorrichtungen aufweist, und

wobei die Mittel zum Senden weiterhin konfiguriert sind, um Daten an die empfangende Vorrichtung gleichzeitig zu dem Senden von Daten durch wenigstens eine Vorrichtung der in dem weiteren Plan spezifizierten Paare von Vorrichtungen zu senden.

15. Ein Computerprogrammprodukt für drahtlose Kommunikationen, das ein computerlesbares Medium mit Befehlen aufweist, die ausgeführt werden können, um das Verfahren nach einem der Ansprüche 1 bis 7 oder 9 bis 13 auszuführen.

**Revendications**

1. Procédé (700) de communication sans fil comprenant :

transmettre (702) une planification initiale indiquant quand chaque appareil d'une pluralité d'appareils doit transmettre un pilote et quand chaque appareil doit transmettre un rapport de résultats produit sur la base de plusieurs pilotes transmis, dans lequel la planification initiale comprend des paires des appareils et, pour chacune des paires, un appareil récepteur dans cette paire auquel l'un des pilotes doit être transmis ;
recevoir (704) des résultats indiqués par la pluralité d'appareils ;
sélectionner (706) au moins une paire des appareils à planifier pour des communications simultanées sur la base au moins des résultats du rapport ; et
transmettre (708) une autre planification indiquant ladite au moins une paire d'appareils sélectionnés planifiés pour des communications simultanées.

2. Procédé (700) selon la revendication 1, dans lequel la planification initiale comprend une séquence de créneaux temporels pour les appareils pour transmettre les rapports de résultats associés aux pilotes reçus au niveau des appareils.

3. Procédé (700) selon la revendication 1, dans lequel chacun des résultats du rapport de chacun des appareils comprend des informations sur des interférences provoquées par un ou plusieurs des pilotes reçus au niveau de cet appareil.

4. Procédé (700) selon la revendication 1, dans lequel la sélection comprend :

déterminer sur la base d'une métrique de performances et/ou sur la base d'une priorité de trafic des appareils, un sous-ensemble préféré des appareils à planifier pour des transmissions simultanées.

5. Procédé (700) selon la revendication 1, dans lequel la planification initiale comprend une liste des appareils ordonnés pour être planifiés selon une priorité de chaque appareil.

6. Procédé (700) selon la revendication 1, dans lequel la planification initiale est communiquée à tous les appareils en transmettant un message de diffusion avec la planification initiale.

7. Procédé (700) selon la revendication 1, dans lequel :

la planification initiale comprend une pluralité de planifications d'envois individuels, et
chacune des planifications d'envois individuels est transmise à un appareil différent de la pluralité d'appareils.

8. Appareil (700A) de communication sans fil comprenant :

des moyens (702A) pour transmettre une planification initiale indiquant quand chaque appareil d'une pluralité d'appareils doit émettre un pilote et quand chaque appareil doit émettre un rapport de résultats produit sur la base de plusieurs pilotes transmis, dans lequel la planification initiale comprend des paires des appareils et, pour chacune des paires, un appareil récepteur dans cette paire auquel l'un des pilotes doit être transmis ;
des moyens (704A) pour recevoir des résultats du rapport de la pluralité d'appareils ; et
des moyens (706A) pour sélectionner au moins une paire des appareils à planifier pour des communications simultanées sur la base au moins des résultats du rapport ; et
dans lequel les moyens (708A) pour transmettre sont en outre agencés pour transmettre une autre planification indiquant ladite au moins une paire sélectionnée d'appareils planifiés pour des communications simultanées.

9. Procédé (800) de communication sans fil comprenant :

recevoir (802) à partir d'un appareil de planification une planification initiale indiquant quand chaque appareil d'une pluralité d'appareils doit transmettre un pilote et quand chaque appareil doit transmettre un rapport de résultats produits sur la base de plusieurs pilotes transmis, dans lequel la programmation initiale comprend des paires des appareils et, pour chacune des paires, un appareil récepteur dans cette paire auquel l'un des pilotes doit être transmis ;

transmettre (804) un pilote à un appareil récepteur dans une paire commune, à un instant indiqué par la planification initiale ;

recevoir (806) les pilotes transmis par les appareils à des instants indiqués par la planification initiale ;

transmettre (808) des résultats produits sur la base des pilotes reçus vers l'appareil de planification ;

recevoir une autre planification à partir de l'appareil de planification comprenant une ou plusieurs paires des appareils planifiées pour des communications simultanées ; et

transmettre des données à l'appareil récepteur simultanément avec une transmission de données par au moins un appareil des paires d'appareils spécifiées dans l'autre planification.

10. Procédé (800) selon la revendication 9, dans lequel la transmission des résultats produits sur la base des pilotes reçus comprend :

transmettre les résultats à l'appareil de planification en utilisant une transmission directionnelle.

11. Procédé (800) selon la revendication 9, dans lequel la transmission du pilote à l'appareil récepteur dans la paire commune comprend :

transmettre le pilote en utilisant une transmission directionnelle.

12. Procédé (800) selon la revendication 9, dans lequel le pilote transmis à l'appareil récepteur comprend un paquet de données ou un message de commande.

13. Procédé (800) selon la revendication 9, dans lequel :

la planification initiale comprend une liste des appareils ordonnés pour la planification avec une priorité pour chaque appareil,

au moins l'un des résultats indique au moins un appareil de la liste ayant une plus faible priorité qu'un appareil transmettant les résultats, et

au moins un pilote dudit au moins un appareil de la liste est reçu avec une puissance égale ou inférieure à une valeur de seuil.

14. Appareil (800A) de communication sans fil comprenant :

des moyens (802A) pour recevoir à partir d'un appareil de planification une planification initiale indiquant quand chaque appareil d'une pluralité d'appareils doit transmettre un pilote et quand chaque appareil doit transmettre un rapport de résultats associés à plusieurs pilotes transmis, dans lequel la programmation initiale comprend des paires des appareils et, pour chacune des paires, un appareil récepteur dans cette paire auquel l'un des pilotes doit être transmis ;

des moyens (804A) pour transmettre un pilote à un appareil récepteur dans une paire commune à un instant indiqué par la planification initiale ;

dans lequel :

les moyens pour recevoir (806A) sont en outre agencés pour recevoir les pilotes transmis par les appareils à des instants indiqués par la planification initiale, et

les moyens pour transmettre (808A) sont en outre agencés pour transmettre pour des résultats produits sur la base des pilotes reçus par l'appareil de planification ;

les moyens pour recevoir sont en outre agencés pour recevoir une autre planification à partir de l'appareil de planification comprenant une ou plusieurs paires des appareils planifiés pour des communications simultanées ; et

les moyens pour transmettre sont en outre agencés pour transmettre des données à l'appareil récepteur simultanément avec une transmission de données par au moins un appareil des paires d'appareils spécifiés dans l'autre planification.

15. Produit programme d'ordinateur pour communication sans fil comprenant un milieu lisible par un ordinateur comprenant les instructions exécutables pour mettre en oeuvre le procédé de l'une quelconque des revendications 1 à 7 ou 9 à 13.

FIG. 1

EP 2 494 839 B1

FIG. 2

FIG. 3

EP 2 494 839 B1

FIG. 4

EP 2 494 839 B1

FIG. 5

600

602
Multi STA
Schedule

STA2
Pilot

604

STA22
Pilot

STA2
Report to AP

606

STA22
Report to AP

608
Multi STA
Schedule
Update

STA1
Pilot

STA11
Pilot

STA1
Report to AP

STA11
Report to AP

FIG. 6

700
702

TRANSMIT AN INITIAL SCHEDULE INDICATING WHEN EACH NODE, OF A PLURALITY OF NODES, IS TO TRANSMIT A PILOT AND WHEN EACH NODE IS TO TRANSMIT A REPORT OF RESULTS GENERATED BASED ON MULTIPLE TRANSMITTED PILOTS

704

RECEIVE RESULTS REPORTED FROM THE PLURALITY OF NODES

706

SELECT AT LEAST ONE PAIR OF THE NODES TO BE SCHEDULED FOR SIMULTANEOUS COMMUNICATIONS, BASED AT LEAST ON THE REPORTED RESULTS

708

TRANSMIT ANOTHER SCHEDULE INDICATING THE SELECTED AT LEAST ONE PAIR OF NODES SCHEDULED FOR SIMULTANEOUS COMMUNICATIONS

FIG. 7

700A

702A

A CIRCUIT FOR TRANSMITTING AN INITIAL SCHEDULE INDICATING
WHEN EACH NODE, OF A PLURALITY OF NODES, IS TO TRANSMIT A
PILOT AND WHEN EACH NODE IS TO TRANSMIT A REPORT OF RESULTS
GENERATED BASED ON MULTIPLE TRANSMITTED PILOTS

704A

A CIRCUIT FOR RECEIVING RESULTS REPORTED FROM THE PLURALITY
OF NODES

706A

A CIRCUIT FOR SELECTING AT LEAST ONE PAIR OF THE
NODES TO BE SCHEDULED FOR SIMULTANEOUS COMMUNICATIONS,
BASED AT LEAST ON THE REPORTED RESULTS

708A

A CIRCUIT FOR TRANSMITTING ANOTHER SCHEDULE
INDICATING THE SELECTED AT LEAST ONE PAIR OF NODES
SCHEDULED FOR SIMULTANEOUS COMMUNICATIONS

FIG. 7A

800

802

RECEIVE, FROM A SCHEDULING NODE, AN INITIAL SCHEDULE INDICATING WHEN EACH NODE, OF A PLURALITY OF NODES, IS TO TRANSMIT A PILOT AND WHEN EACH NODE IS TO TRANSMIT A REPORT OF RESULTS ASSOCIATED WITH MULTIPLE TRANSMITTED PILOTS

804

TRANSMIT A PILOT TO A RECEIVING NODE IN A COMMON PAIR, AT A TIME INDICATED BY THE INITIAL SCHEDULE

806

RECEIVE THE PILOTS TRANSMITTED BY THE NODES AT TIMES INDICATED BY THE INITIAL SCHEDULE

808

TRANSMIT RESULTS GENERATED BASED ON THE RECEIVED PILOTS TO THE SCHEDULING NODE

FIG. 8

800A

802A

A CIRCUIT FOR RECEIVING, FROM A SCHEDULING NODE, AN INITIAL SCHEDULE INDICATING WHEN EACH NODE, OF A PLURALITY OF NODES, IS TO TRANSMIT A PILOT AND WHEN EACH NODE IS TO TRANSMIT A REPORT OF RESULTS ASSOCIATED WITH MULTIPLE TRANSMITTED PILOTS

804A

A CIRCUIT FOR TRANSMITTING A PILOT TO A RECEIVING NODE IN A COMMON PAIR, AT A TIME INDICATED BY THE INITIAL SCHEDULE

806A

A CIRCUIT FOR RECEIVING THE PILOTS TRANSMITTED BY THE NODES AT TIMES INDICATED BY THE INITIAL SCHEDULE

808A

A CIRCUIT FOR TRANSMITTING RESULTS GENERATED BASED ON THE RECEIVED PILOTS TO THE SCHEDULING NODE

FIG. 8A

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2037706 A2